# EUROPEAN PATENT SPECIFICATION

(11) **EP 2 964 695 B1**
(45) Date of publication and mention of the grant of the patent: **12.04.2017**
(21) Application number: 14705523.0
(22) Date of filing: 20.02.2014
(51) Int. Cl.: C08K 3/22, C08K 5/52, C08L 67/02

(54) **FLAME RETARDANT COMPOSITION COMPRISING A THERMOPLASTIC COPOLYETHERESTER ELASTOMER**
FLAMMHEMMENDE ZUSAMMENSETZUNG MIT THERMOPLASTISCHEM COPOLYÄTHERESTER-ELASTOMER
COMPOSITION IGNIFUGE COMPRENANT UN ÉLASTOMÈRE DE COPOLYÉTHERESTER THERMOPLASTIQUE

(30) Priority: 06.03.2013 EP 13157952
(43) Date of publication of application: 13.01.2016
(73) Proprietor: DSM IP Assets B.V., 6411 TE Heerlen (NL)
(72) Inventor: KEESTRA, Beert Jacobus, NL-6100 AA Echt (NL); SCHMIDT, Angelika, NL-6100 AA Echt (NL)
(74) Representative: Dorrestijn, Antoon
(86) International application number: PCT/EP2014/053309
(87) International publication number: WO 2014/135376

(56) References cited:
- WO-A1-2008/011939
- WO-A1-2011/011921

## Description

The invention relates to a flame retardant composition comprising a thermoplastic copolyetherester elastomer. Such a composition is for example known from EP-2047482.

Also described therein are cables having an insulation produced of that composition. In this way a cable is provided that can withstand heavy flame retardancy tests, so that the cable is suitable for many applications where flame retardancy is important. It is also of interest that the composition is free of halogens. This is contrary to cables having an insulation of plasticized PVC. A problem of the known composition however is the high price of the flame retardants used in the composition. This puts a limit to the application of the composition and for example many possibilities to replace plasticized PVC by the halogen free composition are not practiced, because of the high price.

Object of the invention is to provide a halogen free, flame retardant composition that is less costly, but that gives nevertheless a good flame retardancy and is very flexible.

Surprisingly this object is achieved by a composition comprising:
- a thermoplastic copolyetherester elastomer comprising 65 - 90 wt.% of soft segments derived from poly(tetrahydrofuran)diol (pTHF), having a number average molecular weight (Mn) of between 2000 and 4000 kg/kmol.
- at least 30wt% of a metal hydrate.

It is surprising that it is possible to produce the composition according to the invention, because normally the metal hydrate decomposes and so releases its water while being mixed with a molten thermoplastic polyetherester elastomer. However during mixing with the special thermoplastic polyetherester elastomer of the composition of the present invention, comprising the special soft segments, such a decomposition does not take place, so that the metal hydrate keeps its function as a flame retardant.

The composition according to the invention also shows a low smoke density, which is favorable for use in or in the vicinity of electronic devices, as for example laid down in the norm HD.21.14 and in the norm IEC 50525.

The composition is furthermore very flexible, also at relatively high levels of metal hydrate. Therefore the composition is especially suitable for use in flexible cables.

A thermoplastic elastomer is a rubbery material with the processing characteristics of a conventional thermoplastic and below its melting or softening temperature the performance properties of a conventional thermoset rubber. Thermoplastic elastomers are described in Handbook of Thermoplastic Elastomers, second edition, Van Nostrand Reinhold, New York (ISBN 0-442-29184-1).

The thermoplastic copolyetherester elastomer suitably contains hard segments that are built up from repeating units derived from at least one alkylene diol and at least one aromatic dicarboxylic acid or an ester thereof. As alternative to segment, also the term block is being used. The alkylene diol may be a linear or a cycloaliphatic alkylene diol. The linear or cycloaliphatic alkylene diol contains generally 2-6 C-atoms, preferably 2-4 C-atoms. Examples thereof include ethylene glycol, propylene diol and butylene diol. Preferably propylene diol or butylene diol are used, more preferably 1,4-butylene diol. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150°C and preferably of below 190°C. The hard segments may optionally further contain a minor amount of units derived from other dicarboxylic acids, for example isophthalic acid, which generally lowers the melting point of the polyester. The amount of other dicarboxylic acids is preferably limited to not more than 10 mol%, more preferably not more than 5 mol%, so as to ensure that, among other things, the crystallization behaviour of the copolyetherester is not adversely affected. The hard segment is preferably built up from ethylene terephthalate, propylene terephthalate, and in particular from butylene terephthalate as repeating units. Advantages of these readily available units include favourable crystallisation behaviour and melting point, resulting in copolyetheresters with good processing properties, excellent thermal and chemical resistance

Soft segments of the copolyetherester are derived from poly(tetramethylene oxide)diol or poly(tetrahydrofuran)diol (pTHF) having a number average molecular weight (Mn) of between 2000 and 4000 kg/kmol. The value for Mn is normally provided by the supplier of the poly(tetrahydrofuran)diol and may be determined by GPC. Preferably the copolyeterester contains between 65 and 85 wt. % of poly(tetrahydrofuran)diol , more preferably between 70 and 83 wt. % of poly(tetrahydrofuran)diol. Preferably the poly(tetrahydrofuran)diol (pTHF) has a number average molecular weight (Mn) of between 2500 and 4000 kg/kmol. In this way the composition according to the invention is very flexible and yet very strong. Examples and preparation of copolyetheresters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

Examples of suitable metal hydrates include magnesium hydroxide, aluminum hydroxide, alumina monohydrate, hydromagnesite, zinc borate hydrate and any combination thereof. Preferably aluminum hydroxide is used.

The composition according to the invention preferably contains at least 30 wt.%, more preferably at least 40 wt.% of the metal hydrate. Preferably the composition according to the invention contains at most 70 wt. %, more preferably at most 60 wt. % of the metal hydrate.

Preferably the composition contains a synergist. A synergist is a flame retardant which reinforces the flame retardancy of the metal hydrate. Examples of suitable synergists include oligomeric phosphate esters.

Specific examples of suitable oligomeric phosphate esters include resorcinol tetraphenyl diphosphate, bis-phenol A tetraphenyl diphosphate, resorcinol diphosphate, resorcinol diphenyl phosphate (RDP), bisphenol A polyphosphate (BADP), bisphenol A diphenyl phosphate (BPADP), bisphenol A diphosphate (BAPP), (2,6-dimethylphenyl) 1,3-phenylene bisphosphate. Preferably resorcinol diphenyl phosphate (RDP) is used as synergist.

A further group of synergists includes metal salts of phosphinic acids and/or diphosphinic acids or polymeric derivatives thereof, which compounds are also denoted as metal phosphinates. This term will also be used further herein to indicate the same compounds.

Suitably, the metal phosphinate is a metal of a phosphinic acid of the formula [R¹R²P(O)O]⁻ₘM^{m+} (formula I) and/or a diphosphinic acid of the formula [O(O)PR¹-R³-PR²(O)O]²⁻ₙMₓ^{m+} (formula II), and /or a polymer thereof, wherein
- R¹ and R² are equal or different substituents chosen from the group consisting of hydrogen, linear, branched and cyclic C1-C6 aliphatic groups, and aromatic groups,
- R³ is chosen from the group consisting of linear, branched and cyclic C1-C10 aliphatic groups and C6-C10 aromatic and aliphatic-aromatic groups,
- M is a metal chosen from the group consisting of Mg, Ca, Al, Sb, Sn, Ge, Ti, Zn, Fe, Zr, Ce, Bi, Sr, Mn, Li, Na, and K, and
- m, n and x are equal or different integers in the range of 1-4.

Suitable metal phosphinates that can be used as synergist in the present invention are described for example in DE-A 2 252 258, DE-A 2 447 727, PCT/W-097/39053 and EP-0932643-B1. Preferred phosphinates are aluminium-, calcium- and zink-phosphinates, i.e. metal phosphinates wherein the metal M = Al, Ca, Zn respectively, and combinations thereof. Also preferred are metal phosphinates wherein R¹ and R² are the same or different and are equal to H, linear or branched C₁-C₆-alkyl groups, and/or phenyl. Particular preferably, R¹, R² are the same or different and are chosen from the group consisting of hydrogen (H), methyl, ethyl, n-propyl, isopropyl, n-butyl, tert.-butyl, n-pentyl and phenyl. More preferably, R¹ and R² are the same or different and are chosen from the group of substituents consisting of H, methyl and ethyl.

Also preferably R³ is chosen from the group consisting of methylene, ethylene, n-propylene, iso-propylene, n-butylene, tert.-butylene, n-pentylene, n-octylene, n-dodecylene, phenylene and naphthylene.

Highly preferably, the metal phosphinate comprises a hypophosphate and/or a C₁-C₂ dialkylphosphinate, more preferably Ca- hypophosphate and/or an Al-C₁-C₂ dialkylphosphinate, i.e. Al-dimethylphosphinate, Al-methylethylphosphinate and/or Al-diethylphosphinate.

Further synergists include nitrogen containing and nitrogen/phosphor containing compounds. Examples of suitable compounds include any nitrogen or nitrogen and phosphor containing compound that itself is a flame retardant. Suitable nitrogen containing and nitrogen/phosphor containing compounds that can be used as component synergist are described, for example in PCT/EP97/01664, DE-A-197 34 437, DE-A-197 37 72, and DE-A-196 14 424.

Preferably, the nitrogen containing synergist is chosen from the group consisting of benzoguanamine, tris(hydroxyethyl)isocyanurate, allantoine, glycouril, melamine, melamine cyanurate, dicyandiamide, guanidine and carbodiimide, and derivatives thereof.

More preferably, the nitrogen containing synergist comprises a condensations product of melamine. Condensations products of melamine are, for example, melem, melam and melon, as well as higher derivatives and mixtures thereof. Condensations products of melamine can be produced by a method as described, for example, in PCT/WO 96/16948.

Preferably, the nitrogen/phosphor containing synergist is a reaction product of melamine with phosphoric acid and/or a condensation product thereof. With the reaction product of melamine with phosphoric acid and/or a condensation product thereof are herein understood compounds, which result from the reaction of melamine or a condensation products of melamine are, for example, melem, melam and melon, with a phosphoric acid.

Examples include dimelaminephosphate, dimelamine pyrophosphate, melamine phosphate, melamine polyphosphate, melamine pyrophosphate, melamine polyphosphate, melam polyphosphate, melon polyphosphate and melem polyphosphate, as are described for example in PCT/WO 98/39306.More preferably the nitrogen/phosphor containing synergist is melamine polyphosphate.

Also preferably, the nitrogen/phosphor containing synergist is a reaction product of ammonia with phosphoric acid or a polyphosphate modification thereof. Suitable examples include ammonium hydrogenphosphate, ammonium dihydrogenphosphate and ammonium polyphosphate. More preferably the nitrogen/phosphor containing synergist comprises ammonium polyphosphate.

Preferably the synergist is an oligomeric phosphate ester or a metal phosphinate.
The composition according to the invention contains preferably between 1 - 15 wt.% of the synergist relative to the total weight of the thermoplastic composition. In this way a high flame retardancy has been obtained.

The composition according to the invention may suitably comprise one or more additives.

Suitable additives include stabilizers, such as antioxidants, UV-absorbers and heat stabilizers, tougheners, impact modifiers, plasticizers, lubricants, emulsifiers, nucleating agents, fillers, pigments, optical brighteners, further flame retardants, and antistatic agents. Suitable fillers are, for example, calcium carbonate, silicates, talcum, and carbon black.

In a preferred embodiment of the invention the flame retardant thermoplastic composition comprises one or more additives in a total amount of 0.01 - 20 wt.%, more preferably 0.1-10 wt.%, still more preferably 0.2 - 5 wt.%, or even 0.5 - 2 wt.% relative to the total weight of the flame retardant thermoplastic composition.

Preferably the composition according to the invention consists of: Thermoplastic polyetherester elastomer comprising 65 - 90 wt.% of soft segments derived from poly(tetrahydrofuran)diol (pTHF), having a number average molecular weight of between 2000 and 4000 kg/kmol.
40 - 70 wt.% of a metal hydrate.
0 - 15 wt.% of a synergist
0 - 5 wt.% of one or more additives.

The composition according to the invention is suitably used for the production of insulations of electrical wires and cables. The composition according to the invention is als suitably used for the production of strain reliefs of electrical cables.

### Examples.

### Materials used:

Polyetheresters:
1). Polyetherester having 79 wt. % of soft blocks of pTHF having a number average molecular weight of 3000 kg/kmol and hard segments of polybutylene.
2). Polyetherester having 82 wt. % of soft blocks of pTHF having a number average molecular weight of 3000 kg/kmol and hard segments of polybutylene.
3). Polyetherester having 77 wt. % of soft blocks of pTHF having a number average molecular weight of 2000 kg/kmol and hard segments of polybutylene.
4). Polyetherester having 60 wt. % of soft blocks of pTHF having a number average molecular weight of 2000 kg/kmol and hard segments of polybutylene

### Flame retardants and synergists:

ATH: Apyral™ 60 CD, aluminium hydroxide, delivered by Nabaltec from Germany. Flame retardant.
RDP: Fyrolflex™ RDP, resorcinol diphenyl phosphate, ICL Industrial Products from Israel, Synergist.
DEPAL: exolit™ OP930, Aluminium diethyl phosphate, Clariant from Germany. Synergist.

### Methods:

- Flame Retardant Cone Calorimetry: peak Heat Release Rate in kW/m², according to ISO 5660-1.
- SD: Smoke density: IEC61034-2.
- VW-1: Vertical flame test, UL1581 VW-1.
- The value for Mn of poly(tetrahydrofuran)diol has been determined by Size Exclusion Chromatography SEC. Standards of poly(tetrahydrofuran)diol were used to set up a conventional calibration line of Mn as function of retention volume against which the Mn of samples of poly(tetrahydrofuran)diol were measured. SEC equipment Viscotek GPC Max (System ID: LT-5) equipped with Agilent PL MixedE columns and Viscotek Triple Detector Array 302, including ultra-violet (UV), differential refractive index (RI), differential viscometer (DV) and right-angle light-scattering (RALS) detector was used. Poly(tetrahydrofuran)diol samples at concentration 4.5-5.5 mg/ml were eluted with hexafluoroisopropanol solvent at 35°C.

### Sample preparation

Compositions were compounded by making a dry blend of the polyetherester and the flame retardants in a tumbler. The dry blends were fed to and molten in a co-rotating twin screw extruder. After melting and mixing the sample was granulated at the die head of the twin screw extruder. The melt temperature in the extruder was below 215 °C, except for comparative experiment B. Thereafter a SVE cable was extruded according to UL 62. The main constituents of the samples are given in table 1. The samples comprise furthermore 5 wt.% of additives.

### Examples I - IV, comparative experiment A,B

From the comparison of example I and comparative experiment A it is clear that the addition of ATH leads to a pronounced improvement in the flame retardancy, as shown in a strong decrease in the peak HRR from 768 to 220 kW/m².

For examples II - IV the flame retardancy even further increases, due to the use of a synergist.

Comparative experiment B show that if ATH is compounded in a composition comprising a polyetherester with too low amount of soft segments, that the ATH decomposes during compounding, as is indicated by the occurrence of foaming.

**Table 1.**

| example | polymer | soft block | MWT SB | ATH | DEPAL | RDP | Compouding | SD | peak HRR | VW-1 |
|---|---|---|---|---|---|---|---|---|---|---|
| | wt% | wt% | g/mol | wt% | wt% | wt% | - | % transmission | kW/m2 | - |
| I | 34,5 | 79 | 3000 | 60 | | | OK | 87 | 220 | fail |
| II | 34,5 | 82 | 3000 | 55 | 5 | | OK | 69 | 146 | pass |
| III | 26 | 82 | 3000 | 60 | | 8 | OK | 69 | 197 | pass |
| IV | 26 | 77 | 2000 | 60 | | 8 | OK | | | pass |
| | | | | | | | | | | |
| A | 100 | 79 | 3000 | | | | na | | 768 | fail |
| B | 40 | 60 | 2000 | 60 | | | foaming | na | na | na |

## Claims

1. A polymer composition comprising:
- a thermoplastic copolyetherester elastomer comprising 65 - 90 wt.% of soft segments derived from poly(tetrahydrofuran)diol (pTHF), having a number average molecular weight (Mn) of between 2000 and 4000 kg/kmol, measured according to Size Exclusion Chromatography as described in the examples,
- at least 30wt% of a metal hydrate.

2. A polymer composition according to claim 1, wherein the thermoplastic copolyetherester elastomer comprises 65 - 85 wt% of the soft segments derived from pTHF.

3. A polymer composition according to claim 1 or 2, wherein the soft segments are derived from pTHF having a number average molecular weight of between 2500 and 4000 kg/kmol.

4. A polymer composition according to any one of claims 1 - 3, wherein the metal hydrate is aluminium hydroxide.

5. A polymer composition according to any one of claims 1 - 4, wherein the composition comprises 30 - 70 wt. % of the metal hydrate.

6. A polymer composition according to any one of claims 1 - 5, wherein the composition comprises a synergist.

7. A polymer composition according to claim 6, wherein the synergist is an oligomeric phosphate ester.

8. A polymer composition according to claim 6, wherein the synergist is resorcinol diphenyl phosphate.

9. A polymer composition according to claim 6, wherein the synergist is a metal phosphinate.

10. A polymer composition according to claim 9, wherein the metal phosphinate is Aluminium-diethylphosphinate.

11. A polymer composition according to any one of claims 6 - 10, wherein the composition comprises 1 - 15 wt. % of the synergist.

12. Insulation of a wire or a cable of the polymer composition according to any one of the preceding claims.

13. Strain relief of the polymer composition according to any one of the preceding claims.

## Patentansprüche

1. Polymerzusammensetzung, umfassend:
- ein thermoplastisches Copolyetherester-Elastomer, umfassend 65-90 Gew.-% Weichsegmente, die sich von Poly(tetrahydrofuran)diol (pTHF) mit einem gemäß Größenausschlusschromatographie wie in den Beispielen beschrieben gemessenen zahlenmittleren Molekulargewicht (Mn) zwischen 2000 und 4000 kg/kmol ableiten,
- mindestens 30 Gew.-% eines Metallhydrats.

2. Polymerzusammensetzung nach Anspruch 1, wobei das thermoplastische Copolyetherester-Elastomer 65-85 Gew.-% der von pTHF abgeleiteten Weichsegmente umfasst.

3. Polymerzusammensetzung nach Anspruch 1 oder 2, wobei sich die Weichsegmente von pTHF mit einem zahlenmittleren Molekulargewicht zwischen 2500 und 4000 kg/kmol ableiten.

4. Polymerzusammensetzung nach einem der Ansprüche 1-3, wobei es sich bei dem Metallhydrat um Aluminiumhydroxid handelt.

5. Polymerzusammensetzung nach einem der Ansprüche 1-4, wobei die Zusammensetzung 30-70 Gew.-% des Metallhydrats umfasst.

6. Polymerzusammensetzung nach einem der Ansprüche 1-5, wobei die Zusammensetzung einen Synergisten umfasst.

7. Polymerzusammensetzung nach Anspruch 6, wobei es sich bei dem Synergisten um einen oligomeren Phosphatester handelt.

8. Polymerzusammensetzung nach Anspruch 6, wobei es sich bei dem Synergisten um Resorcinoldiphenylphosphat handelt.

9. Polymerzusammensetzung nach Anspruch 6, wobei es sich bei dem Synergisten um ein Metallphosphinat handelt.

10. Polymerzusammensetzung nach Anspruch 9, wobei es sich bei dem Metallphosphinat um Aluminiumdiethylphosphinat handelt.

11. Polymerzusammensetzung nach einem der Ansprüche 6-10, wobei die Zusammensetzung 1-15 Gew.-% des Synergisten umfasst.

12. Isolierung eines Drahts oder eines Kabels aus der Polymerzusammensetzung nach einem der vorhergehenden Ansprüche.

13. Zugentlastung aus der Polymerzusammensetzung nach einem der vorhergehenden Ansprüche.

## Revendications

1. Composition polymère comprenant :
- un élastomère de copolyétherester thermoplastique comprenant 65-90 % en poids de segments mous dérivés d'un poly(tétrahydrofurane)diol (pTHF) ayant un poids moléculaire moyen en nombre (Mn) compris entre 2000 et 4000 kg/kmol, mesuré par chromatographie d'exclusion stérique comme décrit dans les exemples,
- au moins 30 % en poids d'un hydrate métallique.

2. Composition polymère selon la revendication 1, dans laquelle l'élastomère de copolyétherester thermoplastique comprend 65-85 % en poids des segments mous dérivés du pTHF.

3. Composition polymère selon la revendication 1 ou 2, dans laquelle les segments mous sont dérivés d'un pTHF ayant un poids moléculaire moyen en nombre compris entre 2500 et 4000 kg/kmol.

4. Composition polymère selon l'une quelconque des revendications 1 à 3, dans laquelle l'hydrate métallique est l'hydroxyde d'aluminium.

5. Composition polymère selon l'une quelconque des revendications 1 à 4, la composition comprenant 30-70 % en poids de l'hydrate métallique.

6. Composition polymère selon l'une quelconque des revendications 1 à 5, la composition comprenant un synergiste.

7. Composition polymère selon la revendication 6, dans laquelle le synergiste est un ester de phosphate oligomère.

8. Composition polymère selon la revendication 6, dans laquelle le synergiste est le diphénylphosphate de résorcinol.

9. Composition polymère selon la revendication 6, dans laquelle le synergiste est un phosphinate métallique.

10. Composition polymère selon la revendication 9, dans laquelle le phosphinate métallique est le diéthyl-phosphinate d'aluminium.

11. Composition polymère selon l'une quelconque des revendications 6 à 10, la composition comprenant 1-15 % en poids du synergiste.

12. Isolation d'un film ou d'un câble dans la composition polymère selon l'une quelconque des revendications précédentes.

13. Serre-câble dans la composition polymère selon l'une quelconque des revendications précédentes.
